# EUROPEAN PATENT SPECIFICATION

(11) **EP 4 310 658 B1**
(45) Date of publication and mention of the grant of the patent: **01.04.2026**
(21) Application number: 23185535.4
(22) Date of filing: 14.07.2023
(51) Int. Cl.: G06F 3/06, G06F 11/30

(54) **ELECTRONIC DEVICE SUPPORTING OUT-OF-BAND COMMUNICATION, AND METHOD OF OPERATING THE SAME**
ELEKTRONISCHE VORRICHTUNG ZUR UNTERSTÜTZUNG VON BANDEXTERNER KOMMUNIKATION UND VERFAHREN ZUM BETRIEB DAVON
DISPOSITIF ÉLECTRONIQUE PRENANT EN CHARGE UNE COMMUNICATION HORS BANDE ET SON PROCÉDÉ DE FONCTIONNEMENT

(30) Priority: 21.07.2022 KR 20220090564; 02.01.2023 KR 20230000283; 28.06.2023 US 202318215599
(43) Date of publication of application: 24.01.2024
(73) Proprietor: Samsung Electronics Co., Ltd., Suwon-si, Gyeonggi-do 16677 (KR)
(72) Inventor: LEE, Kyungkeun, Suwon-si, 16677 (KR); KIM, Bumjun, Suwon-si, 16677 (KR); LEE, Seunghan, Suwon-si, 16677 (KR)
(74) Representative: Marks & Clerk LLP

(56) References cited:
- US-A1- 2018 292 992
- US-A1- 2020 050 800
- US-A1- 2022 200 968
- ANONYMOUS: "NVM Express Base Specification Revision 2.0", 13 May 2021 (2021-05-13), pages 1 - 400, XP093086797, Retrieved from the Internet <URL:https://nvmexpress.org/wp-content/uploads/NVM-Express-Base-Specification-2_0-2021.06.02-Ratified-5.pdf> [retrieved on 20230928]
- STENFORT ROSS ET AL: "NVMe Cloud SSD Specification", 18 March 2020 (2020-03-18), pages 1 - 72, XP093108684, Retrieved from the Internet <URL:https://www.opencompute.org/documents/nvme-cloud-ssd-specification-v1-0-3-pdf> [retrieved on 20231204]

## Description

### 1. Field

One or more embodiments of the disclosure relate to an electronic device, and more particularly, to a method of operating the electronic device supporting out-of-band communication.

### 2. Description of Related Art

A memory device stores data in response to a write request and outputs data stored memory device in response to a read request. For example, the memory device may be classified as a volatile memory device or a non-volatile memory device. In a volatile memory device (such as a dynamic random access memory (DRAM) device or a static RAM (SRAM) device), the stored data is lost when a power supply is interrupted. In a non-volatile memory device (such as a flash memory device, a phase-change RAM (PRAM), a magnetic RAM (MRAM), or a resistive RAM (RRAM)), the stored data is retained data stored even when a power supply is interrupted.

A non-volatile memory device may be also referred to as a storage device storing a large amount of data, and the storage device may communicate with a host device. A method in which an operating system of a host device communicates with a storage device may be referred to as an in-band management method, and a method in which a baseboard management controller (BMC) of the host device communicates with the storage device without using the operating system may be referred to as an out-of-band management method. US 2018/292992 A1 relates to a computer machine including processors. A baseboard management controller (BMC) is connected to various components of computer machine, which may include storage device. In an embodiment, each of storage devices may communicate with Ethernet switch and Peripheral Component Interconnect Express (PCIe) switch, which may communicate with BMC. Storage devices may collect information about their operation. This information may be reported to BMC via the control plane over PCIe switch. In this manner, communications with BMC do not interfere with communications over the data plane via Ethernet switch. A storage device includes an SDD controller, which includes sharing logic that shares information about request from applications with the BMC.
US 2022/200968 A1 relates to a data storage system with multiple storage devices interconnected by a storage interface. The storage devices may interface with one or more hosts and provide data storage and retrieval capabilities for or through those host systems. The storage interface may provide a primary host interface for host data transfer, as well as a control interface that includes limited connectivity to the host through a baseboard management controller (BMC).

### SUMMARY

Embodiments of the disclosure provide an electronic device supporting out-of-band communication and a method of operating the electronic device.

According to an aspect of the disclosure, there is provided a method of operating an electronic device according to claim 1.

At least some of the above and other features of the invention are set out in the claims.

### BRIEF DESCRIPTION OF THE DRAWINGS

The above and other objects and features of the disclosure will become apparent by describing in detail embodiments thereof with reference to the accompanying drawings.
FIG. 1 is a block diagram of an electronic device according to an example embodiment of the disclosure.
FIG. 2 is a block diagram of a related art electronic device.
FIG. 3 is a block diagram of an electronic device according to an example embodiment of the disclosure.
FIG. 4 is a flowchart describing a method of operating an electronic device according to an example embodiment of the disclosure.
FIG. 5 is a diagram describing a protocol of out-of-band communication according to an example embodiment of the disclosure.
FIGS. 6A-6E are diagrams describing fields of a protocol of out-of-band communication according to an example embodiment of the disclosure.
FIG. 7 is a flowchart describing a method of operating an electronic device according to an example embodiment of the disclosure.
FIG. 8 is a flowchart describing a method of operating an electronic device according to an example embodiment of the disclosure.
FIG. 9 is a flowchart describing a method of operating an electronic device according to an example embodiment of the disclosure.
FIG. 10 is a diagram describing a protocol of out-of-band communication according to an example embodiment of the disclosure.
FIG. 11 is a diagram describing fields of a protocol of out-of-band communication according to an example embodiment of the disclosure.
FIG. 12 is a block diagram of an electronic device according to an example embodiment of the disclosure.

### DETAILED DESCRIPTION

Below, embodiments of the disclosure will be described in detail and clearly to such an extent that one skilled in the art implements embodiment of the disclosure easily.

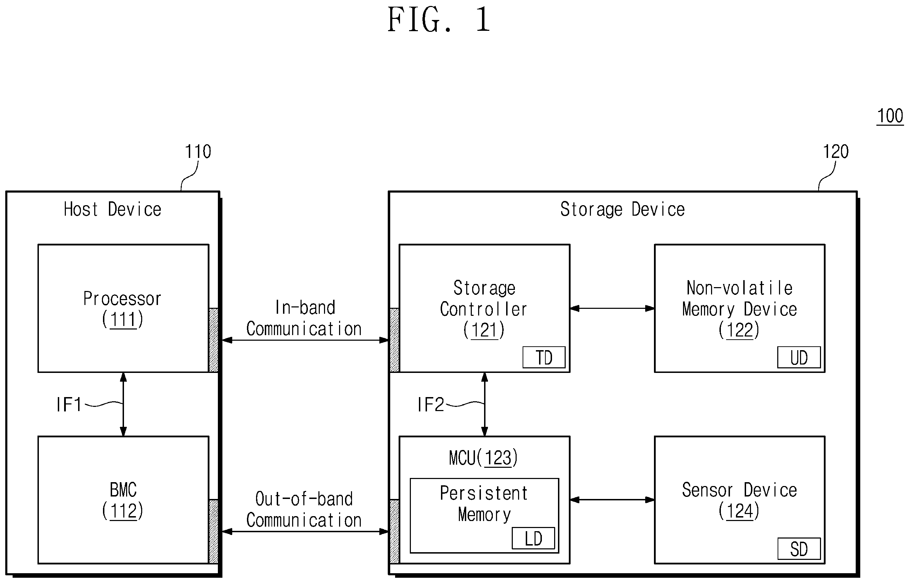

FIG. 1 is a block diagram of an electronic device according to an example embodiment of the disclosure. Referring to FIG. 1, an electronic device 100 includes a host device 110 and a storage device 120. The electronic device 100 may refer to a device, which is configured to manage a large amount of user data UD. For example, the electronic device 100 may include a storage system, a server system, or a database server. However, the disclosure is not limited thereto, and as such, may include other devices. The user data UD may include a variety of information to be provided to the user, the information including, but not limited to, an image, a video, a text, and voice.

The host device 110 may control an overall operation of the electronic device 100. For example, the host device 110 may store data in the storage device 120, may read data stored in the storage device 120, or may manage environment data of the storage device 120 for the purpose of maintaining the reliability of data stored in the storage device 120.

The environment data may include physical environment information such as a voltage, a current, a temperature, and humidity. In the present context, "environment" may refer to a physical state or health (e.g. including one or more physical conditions) of the storage device 120. The physical environment information may be also referred to as "sensor data SD". The environment data may include health information such as program/erase (P/E) cycle information, program count information, erase count information, read count information, error bit count information, and threshold voltage distribution information. The health information may be used to manage the reliability of the user data UD. The health information may be also referred to as "telemetry data TD".

The host device 110 may include a processor 111 and a baseboard management controller (BMC) 112. The processor 111 and the BMC 112 may communicate with each other. For example, the processor 111 and the BMC 112 may communicate with each other through an interface (IF1).

The processor 111 may store data in the storage device 120 or may read data stored in the storage device 120. For example, the processor 111 may be implemented with a central processing unit (CPU). The processor 111 may execute an operating system (OS), and the operating system may support in-band communication with the storage device 120.

The in-band communication may refer to communication between the processor 111 of the host device 110 and a storage controller 121 of the storage device 120. For example, the operating system may be used in the in-band communication between the processor 111 and the storage controller 121. In-band communication may refer to communication through the same band or channel as that used for communication by the operating system.

The BMC 112 may manage the environment data of the storage device 120. The BMC may monitor the physical state of the storage device 120 through the environment data. For example, the BMC 112 may request a micro controller unit (MCU) 123 of the storage device 120 to perform a sensing operation or a monitoring operation. However, the request is not limited to the sensing operation or the monitoring operation, and as such, according to another example embodiment, the BMC 112 may request the MCU 123 to perform other operations. According to an example embodiment, the BMC 112 may receive the environment data from the MCU 123, and may provide the environment data to the processor 111. The operating system executed by the processor 111 may manage the storage device 120 based on the environment data obtained by the BMC 112.

The BMC 112 may support the out-of-band communication with the storage device 120. The out-of-band communication may refer to communication between the BMC 112 of the host device 110 and the MCU 123 of the storage device 120, and the operating system may not be used in the out-of-band communication. According to an example embodiment, an interface for the out-of-band communication may be provided independently of an interface for the in-band communication. That is, the out-of-band communication may be provided through a different band or channel than the in-band communication. Out-of-band communication may utilize one or more different communication ports to the one or more communication ports used by in-band communication.

In an example embodiment, the out-of-band communication may support various protocols. For example, the out-of-band communication may support a protocol complying with the open computer project (OCP) standard. The out-of-band communication may support various kinds of protocols such as a Platform Level Data Model (PLDM) standard, a Network Controller Sideband Interface (NC-SI) standard, a Redfish standard, a Non-Volatile Memory Express Management Interface (NVMe _MI) standard, and a Management Component Transport Protocol (MCTP) standard.

The storage device 120 may include the storage controller 121, a non-volatile memory device 122, the MCU 123, and a sensor device 124.

The storage controller 121 may control an overall operation of the storage device 120. According to an example embodiment, the storage controller 121 may control an operation of the storage device 120 under control of the processor 111. For example, under control of the processor 111, the storage controller 121 may store the user data UD in the non-volatile memory device 122, may read the user data UD stored in the non-volatile memory device 122, or may generate the telemetry data TD by performing the monitoring operation on the non-volatile memory device 122. The monitoring operation may refer to a health check operation that is performed to check a degradation level of a threshold voltage distribution of the non-volatile memory device 122. The storage controller 121 may be also referred to as a "main controller".

The storage controller 121 may communicate with the processor 111, the non-volatile memory device 122, and the MCU 123. The storage controller 121 may support the in-band communication with the processor 111. The storage controller 121 may perform the monitoring operation on the non-volatile memory device 122. The storage controller 121 may provide the telemetry data TD to the MCU 123. According to an example embodiment, the storage controller 121 and the MCU 123 may communicate with each other through an interface (IF2).

Telemetry data may include one or more parameters associated with data storage or data access within the storage device 120. In an example embodiment, the telemetry data TD may include at least one of P/E cycle information, program count information, erase count information, read count information, error bit count information, and threshold voltage distribution information. As used herein, an expression "at least one of" preceding a list of elements modifies the entire list of the elements and does not modify the individual elements of the list. For example, an expression, "at least one of a, b, and c" or "at least one of a, b or c" should be understood as including only a, only b, only c, both a and b, both a and c, both b and c, or all of a, b, and c.

The non-volatile memory device 122 may store the user data UD. For example, the non-volatile memory device 122 may store the user data UD under control of the storage controller 121 or may provide the user data UD to the storage controller 121. The threshold voltage distribution of memory cells of the non-volatile memory device 122 may correspond to the user data UD. The threshold voltage distribution of memory cells may change due to various factors such as retention, read disturb, and hot carrier injection (HCI). The storage controller 121 may manage the degradation level of the non-volatile memory device 122 by obtaining the telemetry data TD through the monitoring operation for the non-volatile memory device 122.

In an example embodiment, the non-volatile memory device 122 may be a NAND flash memory device, but the disclosure is not limited thereto. For example, the non-volatile memory device 122 may be one of various storage devices, which retain data stored therein even though a power is turned off, such as a phase-change random access memory (PRAM), a magnetic random access memory (MRAM), a resistive random access memory (RRAM), and a ferroelectric random access memory (FRAM).

The MCU 123 may monitor the status of the storage device 120 and may manage an event occurring in the storage device 120. The event may include a voltage change, a current change, a humidity change, a temperature change, power-off, etc. The MCU 123 may receive a request associated with the environment data from the BMC 112 and may provide the BMC 112 with a response corresponding to the request of the BMC 112.

The MCU 123 may communicate with the BMC 112, the storage controller 121, and the sensor device 124. The MCU 123 may support the out-of-band communication with the BMC 112. The MCU 123 may receive the telemetry data TD from the storage controller 121. The MCU 123 may receive the sensor data SD from the sensor device 124.

The MCU 123 may include a persistent memory (e.g. non-volatile memory). For example, the persistent memory may be implemented with an electrically erasable programmable read-only memory (EEPROM). The MCU 123 may store at least one of the telemetry data TD and the sensor data SD in the persistent memory as log data LD. The log data LD may include at least one of telemetry data (hereinafter referred to as "previous telemetry data") obtained at a previous time and sensor data (hereinafter referred to as "previous sensor data") obtained at a previous time. For example, the log data LD may include at least one of telemetry data generated by a previous monitoring operation of the storage controller 121 and sensor data generated by a previous sensing operation of the sensor device 124. However, the disclosure is not limited thereto, and as such, according to an example embodiment, the log data LD may include a history of previously collected telemetry data and/or previously collected sensor data. For example, the previously collected telemetry data may include telemetry data collected at one or more previous times and the previously collected sensor data may include sensor data collected at one or more previous times.

The MCU 123 may provide the environment data to the BMC 112 depending on the request of the BMC 112. The environment data may include the sensor data SD, the log data LD, or the telemetry data TD. The MCU 123 may manage a security operation of the sensor data SD, the log data LD, and the telemetry data TD.

The sensor device 124 may sense a physical environment of the storage device 120 to generate the sensor data SD. The sensor device 124 may communicate with the MCU 123. The sensor device 124 may provide the sensor data SD to the MCU 123.

In an example embodiment, the sensor data SD may include at least one of voltage sensor data, current sensor data, temperature sensor data, and humidity sensor data.

As described above, according to an example embodiment of the disclosure, the electronic device 100 may include the host device 110 and the storage device 120. The host device 110 and the storage device 120 may support the in-band communication and the out-of-band communication. The BMC 112 of the host device 110 and the MCU 123 of the storage device 120 may transfer a variety of information in a bidirectional way by using the out-of-band communication.

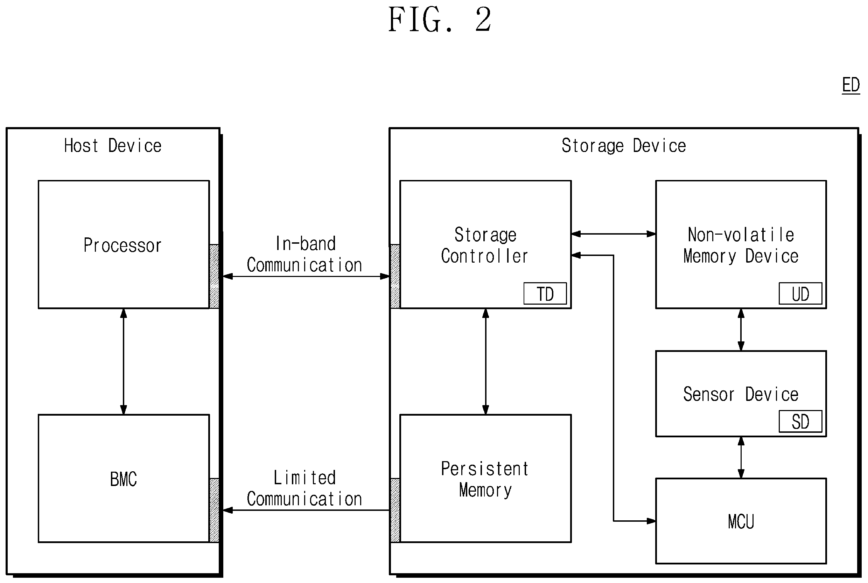

FIG. 2 is a block diagram of a related art electronic device. For better understanding of the disclosure, a related art electronic device ED will be described with reference to FIG. 2, but the related art electronic device ED may include a component that is not disclosed herein.

The related art electronic device ED may include a host device and a storage device. The host device may include a processor and a BMC. The storage device may include a storage controller, a non-volatile memory device, an MCU, a sensor device, and a persistent memory.

The processor of the host device and the storage controller of the storage device may support in-band communication. Through the in-band communication, the processor may provide the storage controller with a request including a command (e.g., a read command, a write command, or an erase command) indicating an operation to be performed in the storage device. Through the in-band communication, the storage controller may provide the processor with the user data UD received from the non-volatile memory device and environment data received from the MCU. The environment data may include at least one of the sensor data SD obtained by the sensing operation of the sensor device and the telemetry data TD obtained by the monitoring operation of the storage controller.

The BMC of the host device and the persistent memory of the storage device may support limited communication. Through the limited communication, the persistent memory may provide the BMC with information stored in the persistent memory (e.g., the stored information may be temperature information when the persistent memory includes a temperature sensor). The limited communication may refer to unidirectional communication from the persistent memory to the BMC.

In the related art electronic device ED, the BMC of the host device and the MCU of the storage device may fail to perform direct communication. The BMC may provide a request indicating management of the environment data to the MCU through the processor and the storage controller. The MCU may provide a response corresponding to the request of the BMC through the storage controller and the processor.

As described above, the related art electronic device ED may not support the out-of-band communication between the BMC and the MCU, and as such, the BMC and the MCU may indirectly communicate with each other through the in-band communication between the processor and the storage controller. In detail, in the related art electronic device ED, as the BMC and the MCU consume the bandwidth of the in-band communication to manage the environment data, an input/output (I/O) speed of the user data UD may decrease. Moreover, since a direct communication between the BMC and the MCU may not be supported, and since the BMC may not support the bidirectional communication with the storage device the number of types of information that the BMC receives from the persistent memory may be less than the number of types of information managed by the MCU. The in-band communication and the limited communication of the related art electronic device ED may fail to satisfy various requirements of a host device, a client or a manufacturer.

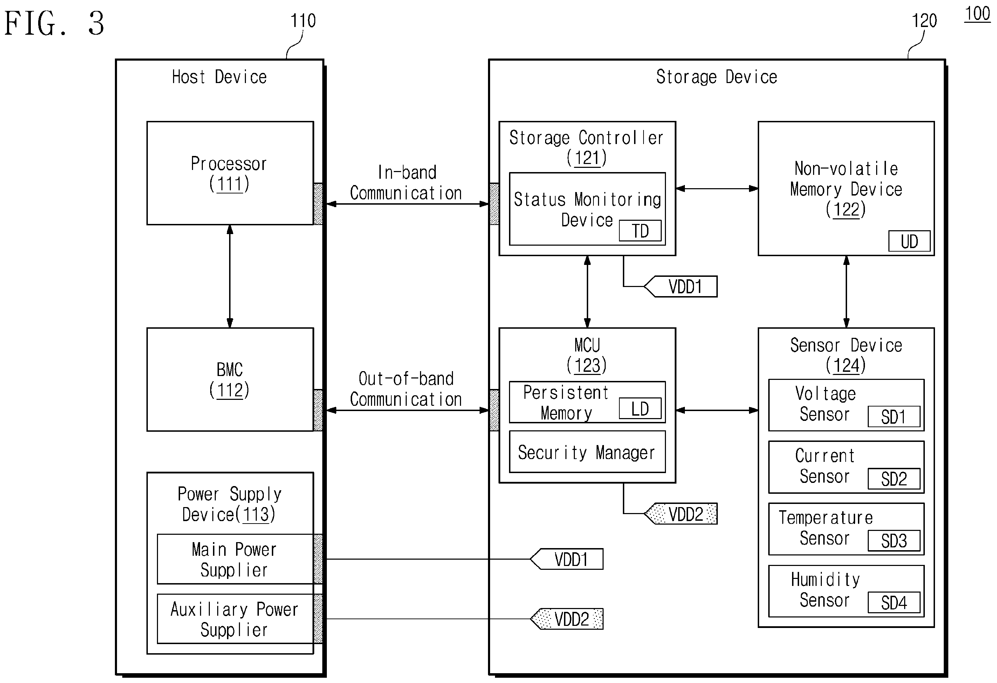

FIG. 3 is a block diagram of an electronic device according to an example embodiment of the disclosure. Referring to FIG. 3, the electronic device 100 may include the host device 110 and the storage device 120. The host device 110 may include the processor 111, the BMC 112, and a power supply device 113. The storage device 120 may include the storage controller 121, the non-volatile memory device 122, the MCU 123, and the sensor device 124.

The processor 111, the BMC 112, the storage controller 121, the non-volatile memory device 122, the MCU 123, and the sensor device 124 may respectively correspond to the processor 111, the BMC 112, the storage controller 121, the non-volatile memory device 122, the MCU 123, and the sensor device 124 of FIG. 1.

The power supply device 113 may include a main power supplier and an auxiliary power supplier. The main power supplier may provide a first power supply voltage VDD1 to the storage device 120. The storage controller 121 of the storage device 120 may be driven by the first power supply voltage VDD1. The auxiliary power supplier may provide a second power supply voltage VDD2 to the storage device 120. The MCU 123 of the storage device 120 may be driven by the second power supply voltage VDD2.

The second power supply voltage VDD2 may be a power supply voltage provided independently of the first power supply voltage VDD1. For example, the main power supplier may provide the first power supply voltage VDD1 to the storage device 120 through a first supply line. The magnitude of the first power supply voltage VDD1 may be about 5 V or about 3.3 V. The auxiliary power supplier may provide the second power supply voltage VDD2 to the storage device 120 through a second supply line. The magnitude of the second power supply voltage VDD2 may be about 3.3 V.

The storage controller 121 may include a status monitoring device. For example, the status monitoring device may be implemented with a software device or firmware module that performs the health check operation of the non-volatile memory device 122. The status monitoring device may generate the telemetry data TD by performing the monitoring operation of the non-volatile memory device 122. The status monitoring device may provide the telemetry data TD to the MCU 123. The MCU 123 may store the telemetry data TD in a persistent memory as the log data LD or may provide the telemetry data TD to the BMC 112 through the out-of-band communication.

The MCU 123 may include the persistent memory and a security manager. The persistent memory may store the log data LD. The log data LD may include at least one of previous telemetry data received from the storage controller 121 and previous sensor data received from the sensor device 124. The MCU 123 may receive a request for the log data LD from the BMC 112 and may provide a response including the log data LD stored in the persistent memory to the BMC 112.

The security manager may manage a security operation performed on the environment data. For example, the security manager may be implemented with a software device or firmware module that performs the security operation. The security manager may negotiate a security algorithm through the out-of-band communication with the BMC 112. Depending on the negotiated security algorithm, the security manager may enable the encryption of the environment data or may disable the encryption of the environment data.

The sensor device 124 may include a voltage sensor, a current sensor, a temperature sensor, and a humidity sensor. The voltage sensor may sense a voltage provided to the non-volatile memory device 122 and may generate first sensor data SD1. The current sensor may sense a current provided to the non-volatile memory device 122 and may generate second sensor data SD2. The temperature sensor may sense a temperature of the non-volatile memory device 122 and may generate third sensor data SD3. The humidity sensor may sense humidity of the non-volatile memory device 122 and may generate fourth sensor data SD4. The first sensor data SD1, the second sensor data SD2, the third sensor data SD3, and fourth sensor data SD4 may correspond to the sensor data SD of FIG. 1.

The sensor device 124 may provide at least one of the first sensor data SD1, the second sensor data SD2, the third sensor data SD3, and fourth sensor data SD4 to the MCU 123 as sensor data. The MCU 123 may store the sensor data in the persistent memory as the log data LD or may provide the sensor data to the BMC 112 through the out-of-band communication.

The processor 111 of the host device 110 and the storage controller 121 of the storage device 120 may support the in-band communication. Through the in-band communication, the processor 111 may provide the storage controller 121 with a request including a command (e.g., a read command, a write command, or an erase command) indicating an operation to be performed in the storage device 120. Through the in-band communication, the storage controller 121 may provide the processor 111 with a response corresponding to the request of the processor 111.

The BMC 112 of the host device 110 and the MCU 123 of the storage device 120 may support the out-of-band communication. Through the out-of-band communication, the BMC 112 may provide the MCU 123 with a request indicating the management of the environment data. Through the out-of-band communication, the MCU 123 may provide the BMC 112 with a response corresponding to the request of the BMC 112.

In other words, the BMC 112 and the MCU 123 may directly communicate with each other through the out-of-band communication. The BMC 112 and the MCU 123 may directly communicate with each other through the out-of-band communication without consuming the bandwidth of the in-band communication. The BMC 112 and the MCU 123 may perform bidirectional communication through the out-of-band communication. The MCU 123 may provide a variety of information about the environment data to the BMC 112 through the out-of-band communication. The out-of-band communication may provide the client or manufacturer with various and flexible communication interface environments.

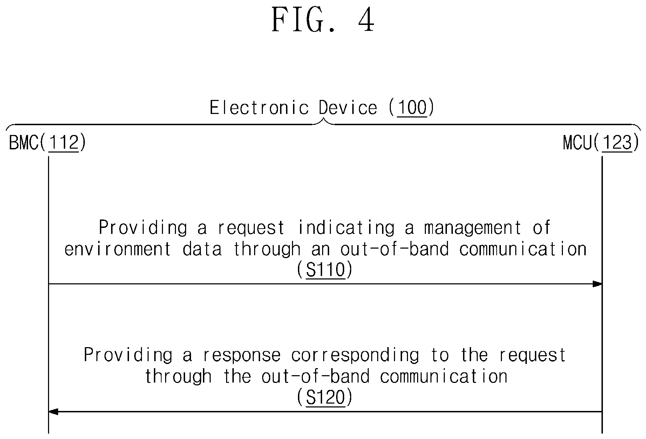

FIG. 4 is a flowchart describing a method of operating an electronic device according to an example embodiment of the disclosure. A method of operating an electronic device according to an example embodiment of the disclosure will be described with reference to FIG. 4.

The electronic device 100 may include the BMC 112 and the MCU 123. The BMC 112 and the MCU 123 may respectively correspond to the BMC 112 and the MCU 123 of FIG. 1. In detail, the electronic device 100 may include a host device and a storage device. The host device may include a processor and the BMC 112. The storage device may include a storage controller and the MCU 123. The processor and the storage controller may support the in-band communication. The BMC 112 and the MCU 123 may support the out-of-band communication.

In operation S110, the BMC 112 of the electronic device 100 may provide a request indicating the management of the environment data to the MCU 123 through the out-of-band communication.

In an example embodiment, the environment data may include sensor data, log data, or telemetry data. For example, the sensor data may be generated based on the sensing operation. The telemetry data may be generated based on the monitoring operation. The log data may include at least one of previous sensor data generated based on a previous sensing operation and/or previous telemetry data generated based on a previous monitoring operation.

In an example embodiment, the management of the environment data may include the security operation for the environment data. For example, the security operation may include negotiating the security algorithm to be used to transfer the environment data, enabling the encryption of the environment data depending on the security algorithm selected by the negotiation of the security algorithm, and disabling the encryption of the environment data.

In operation S120, the MCU 123 of the electronic device 100 may provide a response corresponding to the request in operation S110 to the BMC 112 through the out-of-band communication. For example, the response in operation S120 may indicate the environment data, the selected security algorithm, or whether the enable or disable of the encryption succeeds.

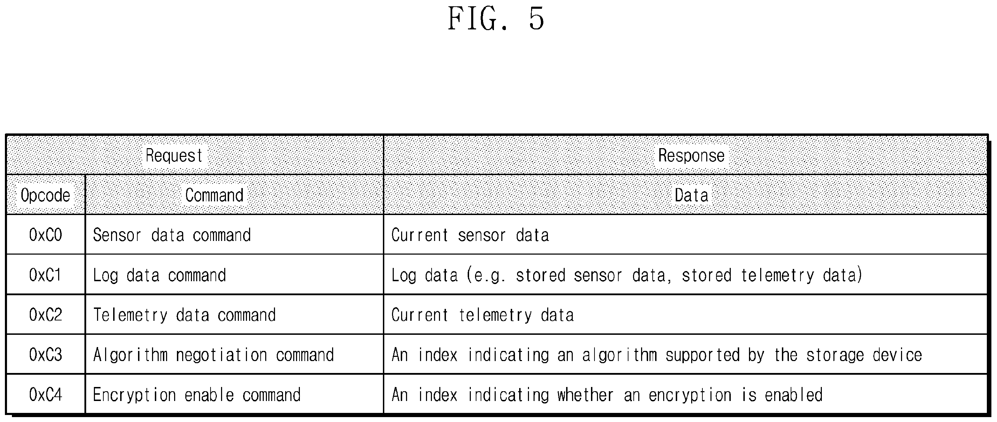

FIG. 5 is a diagram describing a protocol of out-of-band communication according to an example embodiment of the disclosure. Referring to FIG. 5, the protocol of the out-of-band communication may include a request and a response. For example, the request may be one of various requests and the response may be one of various responses. According to an example embodiment, the request may include information about the environment data. For example, the request may include an operation code (opcode) field. An opcode may be a portion of a request that specifies the operation to be performed. According to an example embodiment, data (e.g., a series of bits) written in the opcode field of the request may indicate information about the environment data. The response may include a data field. The request and the response may have a correspondence relationship.

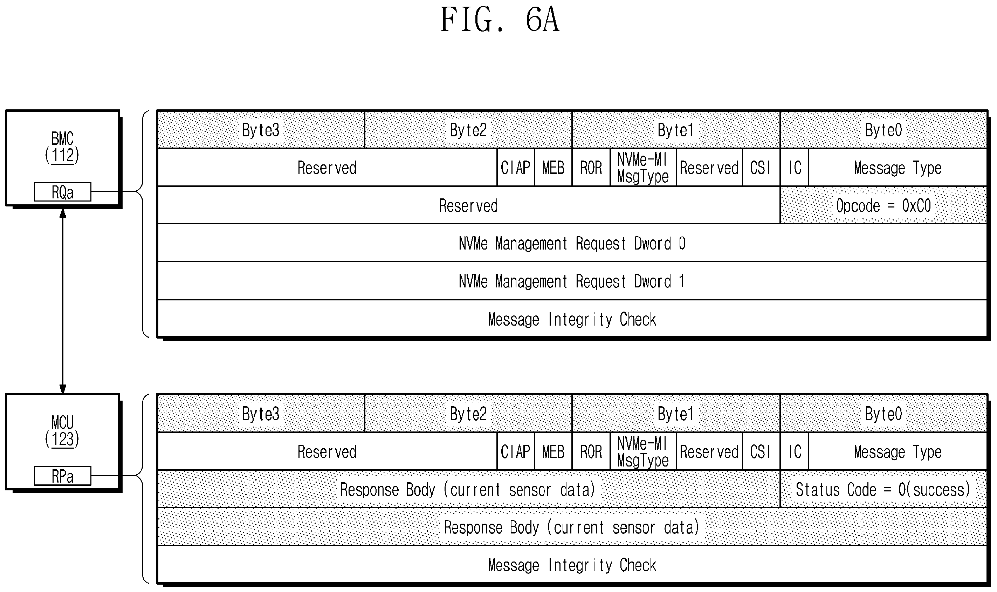

A request in which a value of bits of the opcode field is "0xC0" may indicate a sensor data command. The data field of the response corresponding to the request indicating the sensor data command may include current sensor data. For example, the current sensor data may refer to sensor data generated by the sensing operation of the storage device (e.g. at a current time). This will be described in detail with reference to FIG. 6A.

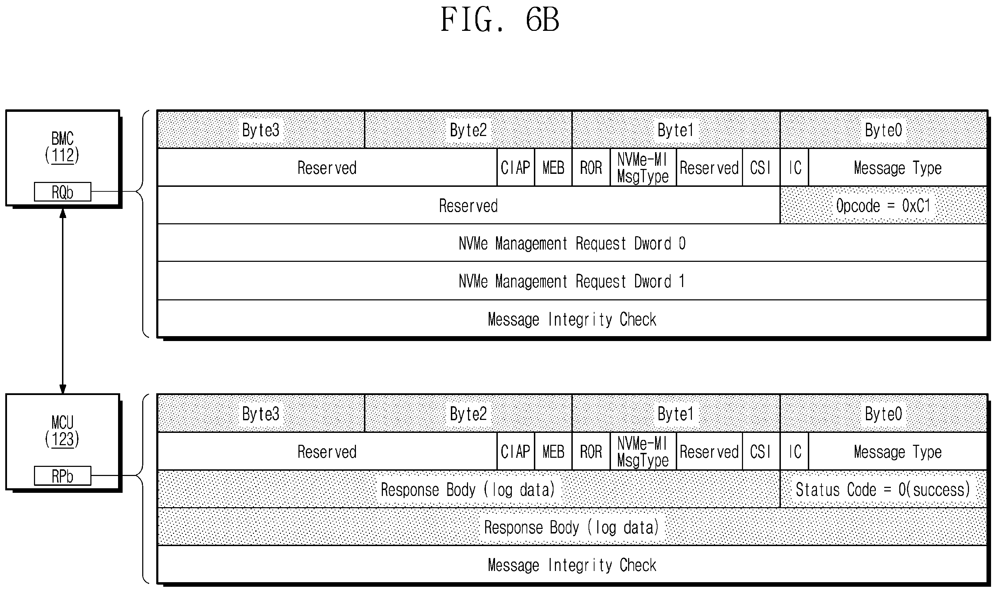

A request in which a value of bits of the opcode field is "0xC1" may indicate a log data command. The data field of the response corresponding to the request indicating the log data command may include log data. For example, the log data may include sensor data stored in the persistent memory of the MCU or telemetry data stored in the persistent memory. The stored sensor data may refer to previous sensor data generated by the previous sensing operation of the storage device. The stored telemetry data may refer to previous telemetry data generated by the previous monitoring operation. This will be described in detail with reference to FIG. 6B.

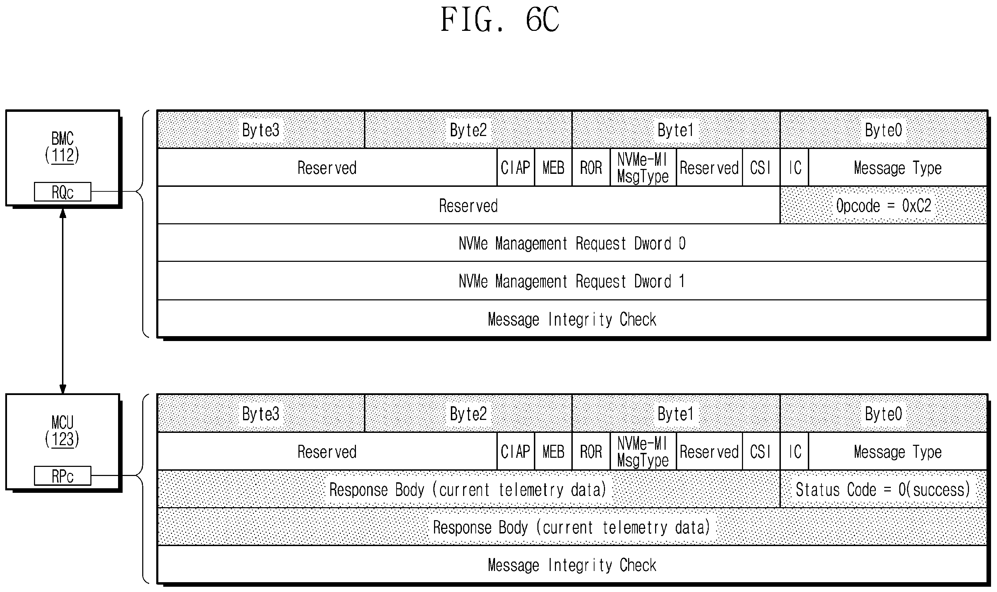

A request in which a value of bits of the opcode field is "0xC2" may indicate a telemetry data command. The data field of the response corresponding to the request indicating the telemetry data command may include current telemetry data. For example, the current telemetry data may refer to telemetry data generated by the monitoring operation of the storage device (e.g. at a current time). This will be described in detail with reference to FIG. 6C.

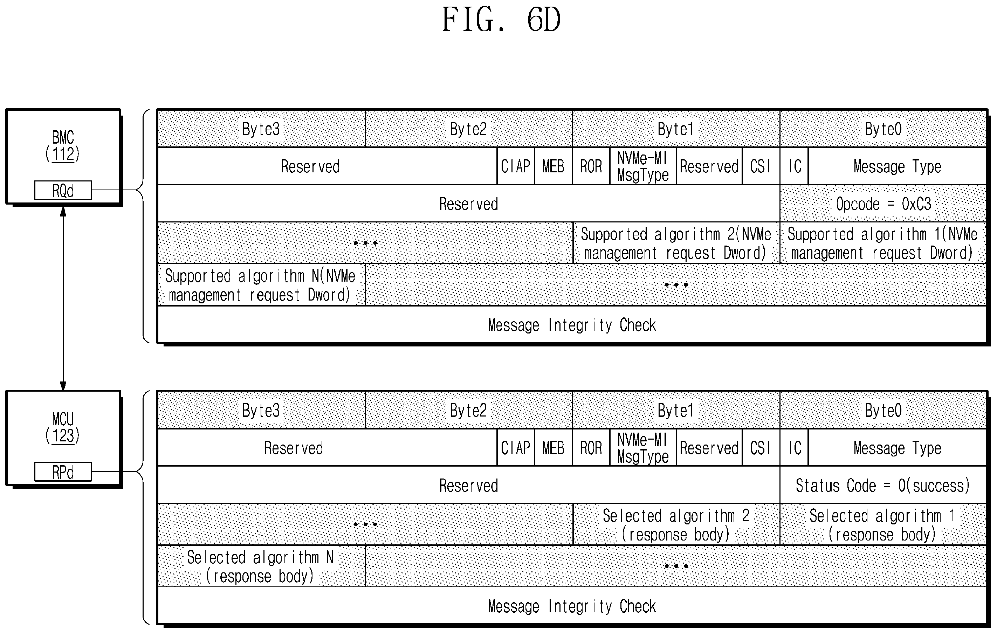

A request in which a value of bits of the opcode field is "0xC3" may indicate an algorithm negotiation command. The data field of the response corresponding to the request indicating the algorithm negotiation command may include an index indicating a security algorithm selected by the storage device. This will be described in detail with reference to FIG. 6D.

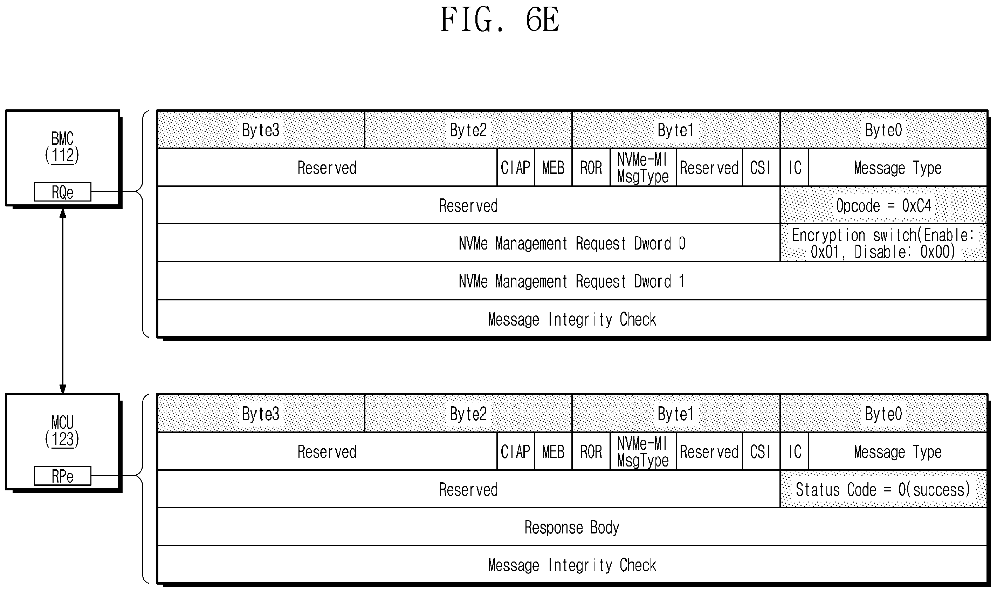

A request in which a value of bits of the opcode field is "0xC4" may indicate an encryption enable command. The data field of the response corresponding to the request indicating the encryption enable command may include an index indicating whether the encryption is enabled. This will be described in detail with reference to FIG. 6E.

However, the disclosure is not limited thereto. For example, the requests and responses described with reference to FIG. 5 may be subdivided into sub-requests and sub-responses or may be integrated into a comprehensive request and a comprehensive response, or a request and a response for processing other kinds of operations may be further added. Furthermore, whilst specific values of bits are defined in FIG. 5 for certain requests, it will be appreciated that these are examples only, and alternative values of bits may be utilized.

FIGS. 6A to 6E are diagrams describing fields of a protocol of out-of-band communication according to an example embodiment of the disclosure. Descriptions of FIGS. 6A to 6E may correspond to the sensor data command, the log data command, the telemetry data command, the algorithm negotiation command, and the encryption enable command of FIG. 5, respectively.

In FIGS. 6A to 6E, requests RQa, RQb, RQc, RQd, and RQe and responses RPa, RPb, RPc, RPd, and RPe may be referred to as "messages".

According to an example embodiment, each of the messages may include at least one of a message type field, an integrity check (IC) field, a command slot identifier (CSI) field, a reserved field, an NVMe_MI message type field, a request or response (ROR) field, a management endpoint buffer (MEB) field, a command initiated auto pause (CIAP) field, an opcode field, at least one NVMe management request Dword field, a status code field, a response body field, and a message integrity check field.

The message type field may indicate a message type. The message may correspond to the request or response. For example, when using MCTP (Management Component Transport Protocol), the value of the message type field may be set to 0x4. The value of the message type field may be determined depending on a standard or a type of a used protocol.

The IC field may indicate whether data is protected by a cyclic redundancy check (CRC) defined in a corresponding protocol. When using the MCTP protocol, the value of the IC field may be set to 0x1.

The CSI field may be used to distinguish command slots. For example, the NVMe_MI standard may define two command slots. The CSI field may indicate whether a request or response corresponds to any command slot.

The reserved field may be a preliminary field. For example, the reserved field may be empty. The reserved field may include arbitrary fields that describe a request or response.

The NVMe_MI message type field may indicate a message type defined in the NVMe standard. The NVMe_MI message type field may indicate whether a message is a command complying with any NVMe standard.

The ROR field may indicate whether a corresponding message is a request or a response. For example, when a flag value of the ROR field is 0, the message may correspond to the request. When the flag value of the ROR field is 1, the message may correspond to the response.

The MEB field may be used to refer to a buffer when the size of the message exceeds a reference size. For example, in the NVMe_MI standard, a reference size of the response body field of the message may be 4224 bytes. When the size of the response body field of the message is smaller than or equal to 4224 bytes, the MEB field may be empty. When the size of the response body field of the message is greater than 4224 bytes, the MEB field may include indexes that are used to refer to buffers.

The CIAP field may determine the order of processing messages. For example, when the value of the CIAP field is 1, the BMC 112 or the MCU 123 that receives a relevant message may stop the previous operation and may process the relevant message with priority. When the value of the CIAP field is 0, the BMC 112 or the MCU 123 that receives the message may perform the relevant message after completing the previous operation.

The opcode field may include bits corresponding to a command (refer to FIG. 5)

The at least one NVMe management request Dword field may be one or more data fields. A Dword (or double word) may be a data field of a particular length (e.g. of 32 bits). Depending on the command type, the NVMe management request Dword fields may be empty, may indicate security algorithms supported by the BMC 112, or may indicate whether the encryption is enabled.

The status code field may be included in a message corresponding to a response. The status code field may indicate whether the request is successfully processed. When the request is successfully processed, the status code field may include a success code. When the processing of the request fails, the status code field may include an error code describing the failure.

The response body field may be included in a message corresponding to a response. The response body field may include environment data requested by the BMC 112, a security algorithm selected by the BMC 112, or a security key value used in an encryption operation corresponding to the selected security algorithm. The encryption operation may include encryption and decryption corresponding to the selected security algorithm.

The message integrity check field may indicate whether a message integrity check is valid. For example, the message integrity check field may indicate whether a relevant message has integrity as a result of the cyclic redundancy check (CRC).

For better understanding of the disclosure, FIGS. 6A to 6E describe various fields with reference to the NVMe_MI standard, but the disclosure is not limited thereto. In addition to the NVMe_MI standard, the disclosure may be applied to various types of protocols supporting the out-of-band communication, such as a PLDM standard, an NC-SI standard, a redfish standard, and an MCTP standard.

Below, features of a request and a response according to a command kind will be described independently with reference to FIGS. 6A to 6E.

Referring to FIG. 6A, the BMC 112 may provide the request RQa to the MCU 123 through the out-of-band communication. The MCU 123 may provide the response RPa to the BMC 112 through the out-of-band communication.

A value of the bits of the opcode field of the request RQa may be 0xC0. The request RQa may correspond to the sensor data command. The MCU 123 may successfully perform the sensing operation based on the request RQa. The MCU 123 may generate the sensor data based on the sensing operation. The sensor data may be current sensor data obtained by the sensing operation.

A status code of the response RPa may include a success code. The success code of the response RPa may indicate that the MCU 123 has successfully processed the request RQa. For example, a value of the success code indicating success may be 0. The response body field of the response RPa may include the current sensor data.

Referring to FIG. 6B, the BMC 112 may provide the request RQb to the MCU 123 through the out-of-band communication. The MCU 123 may provide the response RPb to the BMC 112 through the out-of-band communication.

A value of the bits of the opcode field of the request RQb may be 0xC1. The request RQb may correspond to the log data command. The MCU 123 may successfully load the log data stored in the persistent memory of the MCU 123 based on the request RQb. The log data may include at least one of previous sensor data obtained by the previous sensing operation and previous telemetry data obtained by the previous monitoring operation.

A status code of the response RPb may include a success code. The success code of the response RPb may indicate that the MCU 123 has successfully processed the request RQb. The response body field of the response RPb may include the log data.

Referring to FIG. 6C, the BMC 112 may provide the request RQc to the MCU 123 through the out-of-band communication. The MCU 123 may provide the response RPc to the BMC 112 through the out-of-band communication.

A value of the bits of the opcode field of the request RQc may be 0xC2. The request RQc may correspond to the telemetry data command. The MCU 123 may successfully perform the monitoring operation based on the request RQc. The MCU 123 may generate the telemetry data based on the monitoring operation. The telemetry data may be current telemetry data obtained by the monitoring operation.

A status code of the response RPc may include a success code. The success code of the response RPc may indicate that the MCU 123 has successfully processed the request RQc. The response body field of the response RPc may include the current telemetry data.

Referring to FIG. 6D, the BMC 112 may provide the request RQd to the MCU 123 through the out-of-band communication. The MCU 123 may provide the response RPd to the BMC 112 through the out-of-band communication.

A value of the bits of the opcode field of the request RQd may be 0xC3. The request RQd may correspond to the algorithm negotiation command. The at least NVMe management request Dword field of the request RQd may include first to N-th security algorithms that are supported by the BMC 112. The first to N-th security algorithms may be security algorithms that are supported by the BMC 112. Herein, "N" is an arbitrary natural number. The first to N-th security algorithms may be different in an encryption method or rule. The MCU 123 may determine one of the first to N-th security algorithms as a target security algorithm, based on the request RQd.

A status code of the response RPd may include a success code. The success code of the response RPd may indicate that the MCU 123 has successfully processed the request RQd. The response body field of the response RPd may include the target security algorithm selected by the MCU 123 from among the first to N-th security algorithms supported by the BMC 112. For example, the MCU 123 may select one of the first to N-th security algorithms as the target security algorithm. In the response body field of the response RPd, the target security algorithm may have a first value, and each of the remaining security algorithms other than the target security algorithm among the first to N-th security algorithms may have a second value.

In an example embodiment, each of the first to N-th security algorithms may include an index for identification of an algorithm and a security key value of the BMC 112 or a security key value of the MCU 123, which is used in the encryption operation corresponding to a relevant security algorithm.

Referring to FIG. 6E, the BMC 112 may provide the request RQe to the MCU 123 through the out-of-band communication. The MCU 123 may provide the response RPe to the BMC 112 through the out-of-band communication.

A value of the bits of the opcode field of the request RQe may be 0xC4. The request RQe may correspond to the encryption enable command. Some of the at least one NVMe management request Dword field of the request RQe may be used as an encryption switch field. The encryption switch field of the request RQe may indicate the enable of the encryption or the disable of the encryption. For example, when the BMC 112 enables the encryption, a value of the encryption switch field may be 0x01. When the BMC 112 disables the encryption, a value of the encryption switch field may be 0x00. The MCU 123 may successfully enable or disable the encryption based on the request RQe.

A status code of the response RPe may include a success code. The success code of the response RPe may indicate that the MCU 123 has successfully processed the request RQe.

In an example embodiment, the response RPe may include a security key value that is used in the encryption operation corresponding to the target security algorithm. For example, the encryption switch field of the request RQe may indicate the enable of the encryption. The response RPe may include a security key value that is used in decryption of the BMC 112.

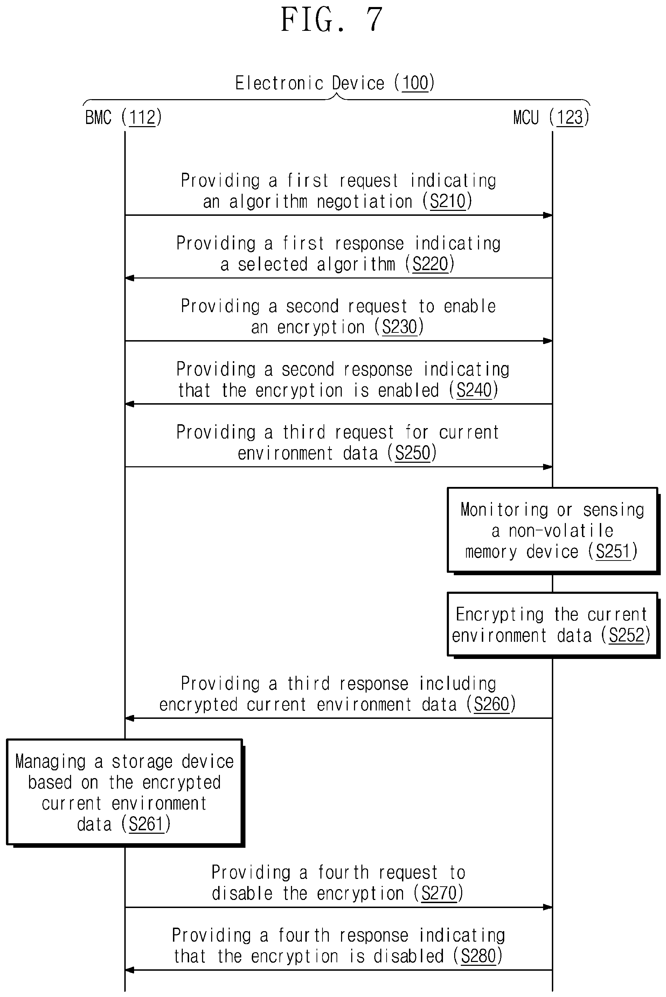

FIG. 7 is a flowchart describing a method of operating an electronic device according to an example embodiment of the disclosure.

The electronic device 100 may include the BMC 112 and the MCU 123. The BMC 112 and the MCU 123 may respectively correspond to the BMC 112 and the MCU 123 of FIG. 1. In detail, the electronic device 100 may include a host device and a storage device. The host device may include a processor and the BMC 112. The storage device may include a storage controller and the MCU 123. The processor and the storage controller may support the in-band communication. The BMC 112 and the MCU 123 may support the out-of-band communication.

In operation S210, the BMC 112 of the electronic device 100 may provide a first request indicating an algorithm negotiation to the MCU 123. For example, the bits of the opcode field of the first request may indicate the algorithm negotiation command. The first request may include one or more security algorithms that are supported by the BMC 112. The MCU 123 may select one of the one or more security algorithms of the first request as the target security algorithm. The target security algorithm may be supported by both the BMC 112 and the MCU 123.

In operation S220, the MCU 123 of the electronic device 100 may provide a first response indicating the selected algorithm to the BMC 112. The first response may include the target security algorithm selected by the MCU 123 from among the one or more security algorithms supported by the BMC 112.

In operation S230, the BMC 112 of the electronic device 100 may provide a second request for enabling the encryption to the MCU 123. For example, the bits of the opcode field of the second request may indicate the encryption enable command. The encryption switch field of the second request may indicate the enable of the encryption. The MCU 123 may enable the encryption of the environment data based on the second request. After the encryption is enabled, until the encryption is disabled, the MCU 123 may encrypt the environment data and may provide the encrypted environment data to the BMC 112.

In operation S240, the MCU 123 of the electronic device 100 may provide the BMC 112 with a second response indicating that the encryption is enabled. The status code of the second response may indicate the success of the second request.

In operation S250, the BMC 112 of the electronic device 100 may provide a third request for current environment data to the MCU 123. Bits of the opcode field of the third request may indicate the sensor data command or the telemetry data command. The current environment data may indicate the sensor data or the telemetry data.

In operation S251, the MCU 123 of the electronic device 100 may perform the monitoring operation or the sensing operation of the non-volatile memory device in the storage device and may generate current environment data based on the monitoring operation or the sensing operation.

For example, when the bits of the opcode field of the third request indicate the sensor data command, the MCU 123 may perform the sensing operation of the non-volatile memory device and may generate the sensor data based on the sensing operation. The MCU 123 may manage the sensor data as the current environment data.

According to an example embodiment, the MCU 123 may perform the monitoring operation or the sensing operation of the non-volatile memory device based on the third request from the BMC 112. For example, the MCU 123 may perform the monitoring operation or the sensing operation of the non-volatile memory device in response to the third request from the BMC 112. However, the disclosure is not limited thereto, and as such, according to another example embodiment, the MCU 123 may perform the monitoring operation or the sensing operation of the non-volatile memory device independent of the third request from the BMC 112. For example, the MCU 123 may periodically perform the monitoring operation or the sensing operation of the non-volatile memory device.

As another example, when the bits of the opcode field of the third request indicate the telemetry data command, the MCU 123 may perform the monitoring operation of the non-volatile memory device and may generate the telemetry data based on the monitoring operation. The MCU 123 may manage the telemetry data as the current environment data.

In operation S252, the MCU 123 of the electronic device 100 may encrypt the current environment data. For example, the MCU 123 may encrypt the current environment data based on the target security algorithm selected based on the first request in operation S210.

In operation S260, the MCU 123 of the electronic device 100 may provide a third response including the encrypted current environment data to the BMC 112.

In operation S261, the BMC 112 of the electronic device 100 may manage the storage device based on the encrypted current environment data. For example, the BMC 112 may decrypt the encrypted current environment data. The BMC 112 may check a physical status of the storage device or a reliability level of user data based on the decrypted current environment data and may manage the storage device depending on the checked physical status or reliability level.

In operation S270, the BMC 112 of the electronic device 100 may provide a fourth request for disabling the encryption to the MCU 123. For example, bits of the opcode field of the fourth request may indicate the encryption enable command. The encryption switch field of the fourth request may indicate the disable of the encryption. The MCU 123 may disable the encryption of the environment data based on the fourth request. After the encryption is disabled, until the encryption is again enabled, the MCU 123 may provide the BMC 112 with the unencrypted environment data.

In operation S280, the MCU 123 of the electronic device 100 may provide the BMC 112 with a fourth response indicating that the encryption is disabled. The status code of the fourth response may indicate the success of the fourth request.

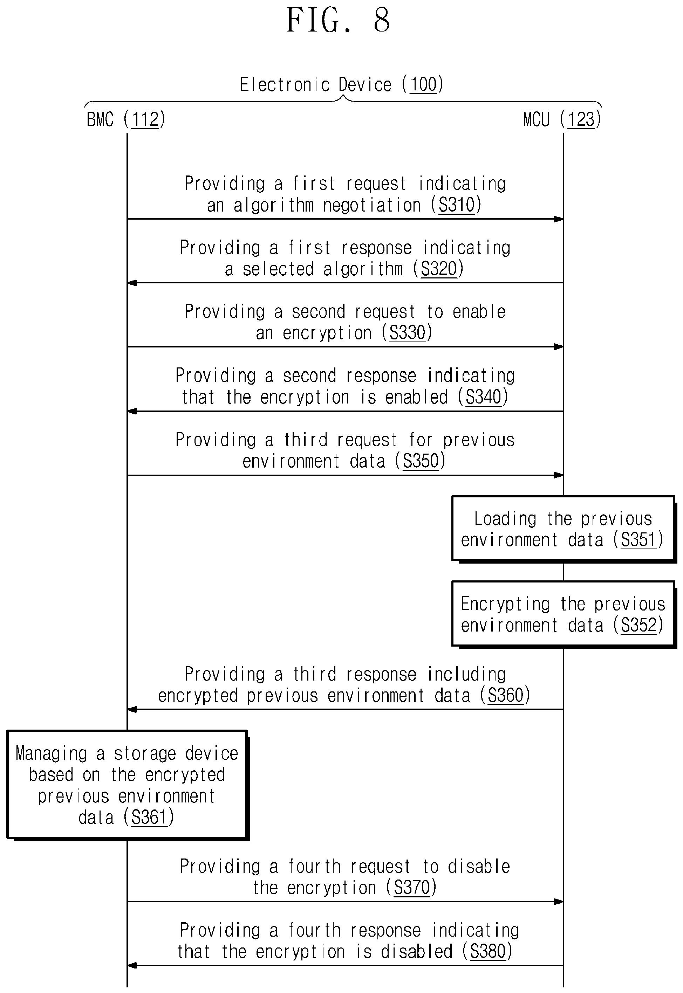

FIG. 8 is a flowchart describing a method of operating an electronic device according to an example embodiment of the disclosure. A method of operating an electronic device according to an example embodiment of the disclosure will be described with reference to FIG. 8.

The electronic device 100 may include the BMC 112 and the MCU 123. The BMC 112 and the MCU 123 may respectively correspond to the BMC 112 and the MCU 123 of FIG. 1. In detail, the electronic device 100 may include a host device and a storage device. The host device may include a processor and the BMC 112. The storage device may include a storage controller and the MCU 123. The processor and the storage controller may support the in-band communication. The BMC 112 and the MCU 123 may support the out-of-band communication.

Operation S310, operation S320, operation S330, operation S340, operation S370, and operation S380 are similar to operation S210, operation S220, operation S230, operation S240, operation S270, and operation S280 of FIG. 7, and thus, additional description will be omitted to avoid redundancy.

In operation S350, the BMC 112 of the electronic device 100 may provide a third request for previous environment data to the MCU 123. Bits of the opcode field of the third request may indicate the log data command. The previous environment data may indicate the log data. The log data may be stored in the persistent memory of the MCU 123. The log data may include at least one of previous sensor data generated based on the previous sensing operation and previous telemetry data generated based on the previous monitoring operation.

In operation S351, the MCU 123 of the electronic device 100 may load the previous environment data. For example, the MCU 123 may read the log data stored in the persistent memory embedded in the MCU 123. The MCU 123 may manage the log data as the previous environment data.

In operation S352, the MCU 123 of the electronic device 100 may encrypt the previous environment data. For example, the MCU 123 may encrypt the previous environment data based on the target security algorithm selected based on the first request in operation S310.

In operation S360, the MCU 123 of the electronic device 100 may provide a third response including the encrypted previous environment data to the BMC 112.

In operation S361, the BMC 112 of the electronic device 100 may manage the storage device based on the encrypted previous environment data. For example, the BMC 112 may decrypt the encrypted previous environment data. The BMC 112 may check a physical status of the storage device or a reliability level of user data based on the decrypted previous environment data and may manage the storage device depending on the checked physical status or reliability level.

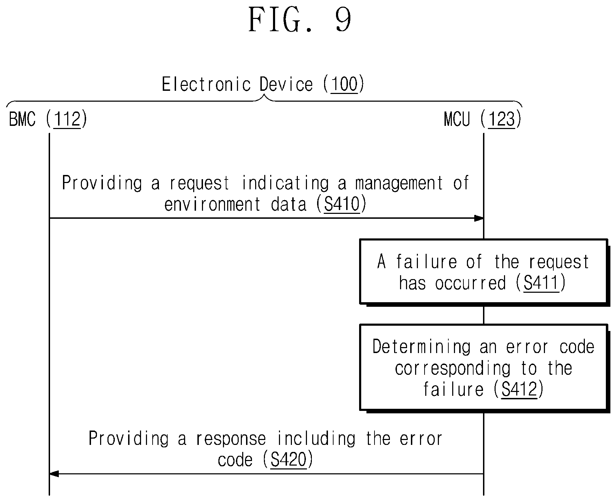

FIG. 9 is a flowchart describing a method of operating an electronic device according to an example embodiment of the disclosure. A method of operating an electronic device according to an example embodiment of the disclosure will be described with reference to FIG. 9.

The electronic device 100 may include the BMC 112 and the MCU 123. The BMC 112 and the MCU 123 may respectively correspond to the BMC 112 and the MCU 123 of FIG. 1. In detail, the electronic device 100 may include a host device and a storage device. The host device may include a processor and the BMC 112. The storage device may include a storage controller and the MCU 123. The processor and the storage controller may support the in-band communication. The BMC 112 and the MCU 123 may support the out-of-band communication.

In operation S410, the BMC 112 of the electronic device 100 may provide the MCU 123 with a request indicating the management of the environment data. For example, bits of the opcode field of the request may indicate the sensor data command, the log data command, the telemetry data command, the algorithm negotiation command, or the encryption enable command.

In operation S411, the MCU 123 of the electronic device 100 may fail to process the request in operation S410. The failure of the request in operation S410 may occur. For example, the MCU 123 may fail to process the request in operation S410 due to various factors.

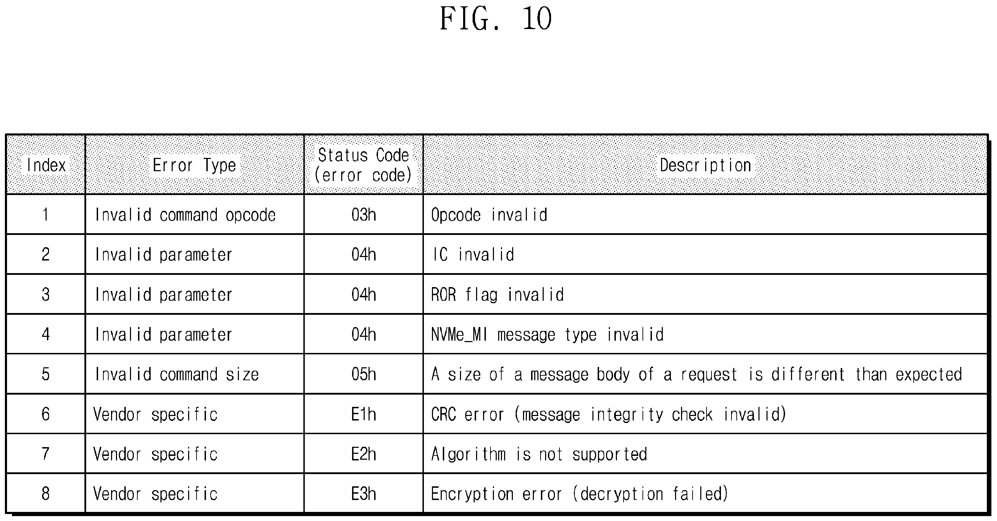

In operation S412, the MCU 123 of the electronic device 100 may determine an error code corresponding to the failure in operation S411. The error code may indicate a factor causing the failure of the request in operation S411. This will be described in detail with reference to FIG. 10.

In operation S420, the MCU 123 of the electronic device 100 may provide the BMC 112 with a response indicating the error code in operation S412.

FIG. 10 is a diagram describing a protocol of out-of-band communication according to an example embodiment of the disclosure. An error code according to the protocol of the out-of-band communication will be described with reference to FIG. 10. The error code may be written in the status code field of the response provided through the out-of-band communication. The error code may be used when the request fails. The error code may indicate a factor causing the failure of the request.

In a first index (index 1), the error type may indicate an invalid command opcode. For example, the error type may indicate that a value of bits of the opcode field of the request received from the BMC is invalid. A value of the error code written in the status code field may be 03h.

In a second index (index 2), the error type may indicate an invalid parameter. For example, the error type may indicate that the IC field is invalid. A value of the error code written in the status code field may be 04h.

In a third index (index 3), the error type may indicate an invalid parameter. For example, the error type may indicate that the ROR field is invalid. When the ROR field has a value other than a flag value corresponding to the request and a flag value corresponding to the response, the ROR field may be invalid. A value of the error code written in the status code field may be 04h.

In a fourth index (index 4), the error type may indicate an invalid parameter. For example, the error type may indicate that the NVMe_MI message type is invalid. A value of the error code written in the status code field may be 04h.

In a fifth index (index 5), the error type may indicate an invalid command size. For example, the error type may indicate that a size of a message body of the request received from the BMC exceeds a reference size. Because the size of the message body is different from an expected size, the MCU may have difficulty in processing the request. A value of the error code written in the status code field may be 05h.

In a sixth index (index 6), the error type may indicate a vendor specific error. For example, the error type may indicate that the request received from the BMC is invalid as a result of the message integrity check for the request. When a result of the cyclic redundancy check (CRC) indicates that the request has integrity, the error type of the sixth index may be used. A value of the error code written in the status code field may be E1h.

In a seventh index (index 7), the error type may indicate a vendor specific error. For example, the error type may indicate that all the security algorithms supported by the BMC are not supported by the MCU. When the MCU is incapable of selecting the target security algorithm, the error type of the seventh index may be used. A value of the error code written in the status code field may be E2h.

In an eighth index (index 8), the error type may indicate a vendor specific error. For example, the error type may indicate the failure of the encryption by the MCU. After the encryption is enabled depending on the request of the BMC, when the MCU fails to encrypt the environment data or when the BMC fails to decrypt the encrypted environment data, the erase type of the eighth index may be used. A value of the error code written in the status code field may be E3h.

However, the disclosure is not limited thereto. For example, error codes indicating any other factors may be further included in addition to the error types described with reference to FIG. 10. Furthermore, different values for the error codes may be used than those shown in FIG. 10.

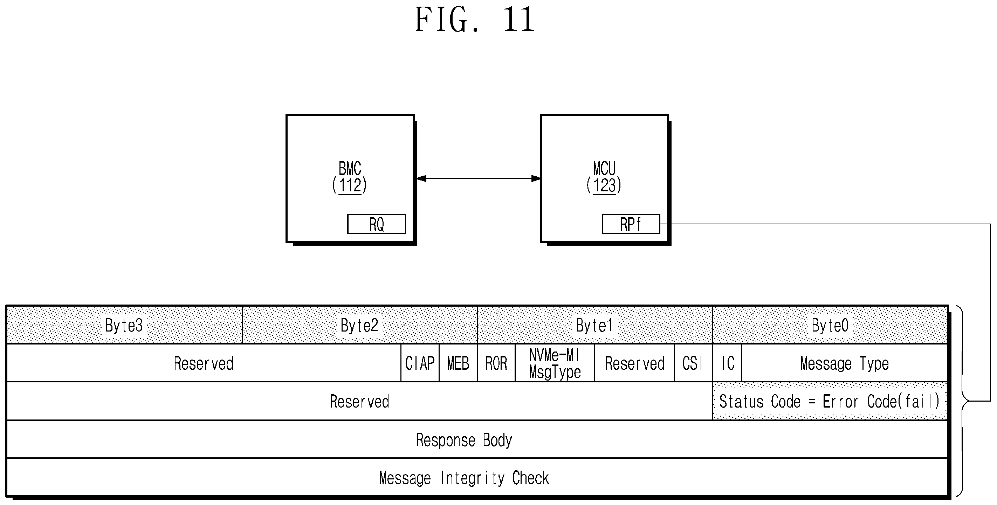

FIG. 11 is a diagram describing fields of a protocol of out-of-band communication according to an example embodiment of the disclosure. Referring to FIG. 11, the BMC 112 may provide the request RQ to the MCU 123 through the out-of-band communication. The request RQ may correspond to the request RQa of FIG. 6A, the request RQb of FIG. 6B, the request RQc of FIG. 6C, the request RQd of FIG. 6D, or the request RQe of FIG. 6E. The MCU 123 may fail to process the request RQ received from the BMC 112. That is, the failure of the request RQ may occur.

The MCU 123 may provide a response RPf to the BMC 112 through the out-of-band communication. The response RPf may indicate the failure of the request RQ.

The response RPf may include at least one of the message type field, the IC field, the reserved field, the NVMe_MI message type field, the ROR field, the MEB field, the CIAP field, the status code field, the response body field, and the message integrity field. Features of the above fields are similar to those described with reference to FIGS. 6A to 6E, and thus, additional description will be omitted to avoid redundancy.

When the MCU 123 fails to process the request RQ, the MCU 123 may provide the BMC 112 with the response RPf including the status code field in which the error code is written. The error code may be one of the error codes described with reference to FIG. 10.

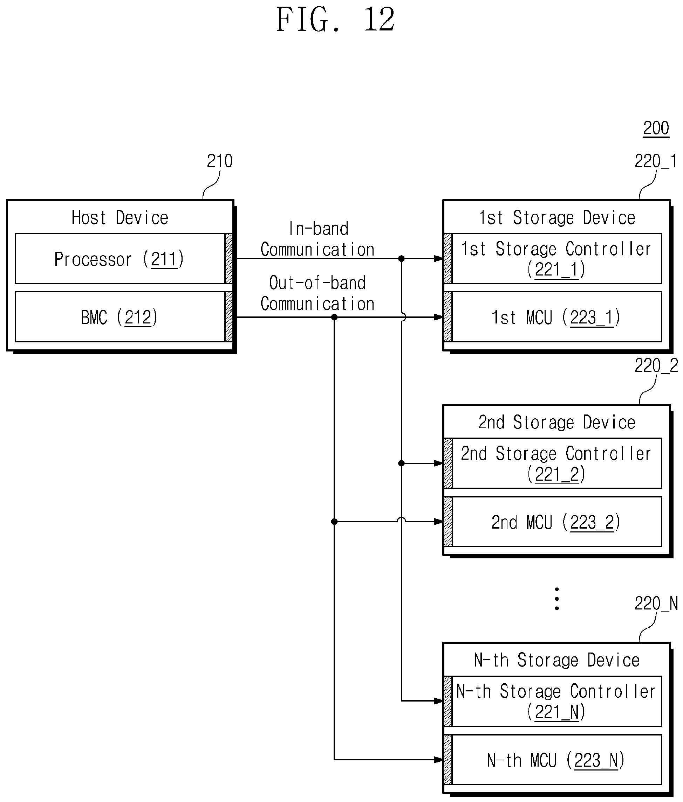

FIG. 12 is a block diagram of an electronic device according to an example embodiment of the disclosure. Referring to FIG. 12, an electronic device 200 may include a host device 210 and first to N-th storage devices 220_1 to 220_N. Each of the first to N-th storage devices 220_1 to 220_N may operate to be similar to the storage device 120 of FIG. 1.

The host device 210 may include a processor 211 and a BMC 212. The processor 211 and the BMC 212 may respectively correspond to the processor 111 and the BMC 112 of FIG. 1.

The first storage device 220_1 may include a first storage controller 221_1 and a first MCU 223_1. The first storage controller 221_1 may support the in-band communication with the processor 211. The first MCU 223_1 may support the out-of-band communication with the BMC 212.

The second storage device 220_2 may include a second storage controller 221_2 and a second MCU 223_2. The second storage controller 221_2 may support the in-band communication with the processor 211. The second MCU 223_2 may support the out-of-band communication with the BMC 212.

The N-th storage device 220_N may include an N-th storage controller 221_N and an N-th MCU 223_N. The N-th storage controller 221_N may support the in-band communication with the processor 211. The N-th MCU 223_N may support the out-of-band communication with the BMC 212. Herein, "N" may be irrelevant to the number of algorithms of FIG. 6D and may be an arbitrary natural number.

The processor 211 of the host device 210 may support the in-band communication for each of the first to N-th storage controllers 221_1 to 221_N.

The BMC 212 of the host device 210 may support the out-of-band communication for each of the first to N-th MCU 223_1 to 223_N.

The host device 210 may independently manage the first to N-th storage devices 220_1 to 220_N through the out-of-band communication.

For example, the method of operating the electronic device 200 may include providing, by the BMC 212, a first request indicating the management of first environment data to the first MCU 223_1 through the out-of-band communication, providing, by the first MCU 223_1, a first response corresponding to the first request to the BMC 212 through the out-of-band communication, providing, by the BMC 212, a second request to the second MCU 223_2 indicating the management of second environment data through the out-of-band communication, and providing, by the second MCU 223_2, a second response corresponding to the second request to the BMC 212 through the out-of-band communication.

According to an example embodiment of the disclosure, an electronic device supporting out-of-band communication and a method of operating the same are provided.

**In** addition, an electronic device that supports the bidirectional communication between the BMC and the MCU, transfers a variety of information of a storage device through the out-of-band communication, and drives the MCU by using an individual power supply voltage and a method of operating the same are provided.

While the disclosure has been described with reference to embodiments thereof, it will be apparent to those of ordinary skill in the art that various changes and modifications may be made thereto without departing from the disclosure as set forth in the following claims.

## Claims

1. A method of operating an electronic device (100) including a host device (110) having a processor (111) and a baseboard management controller (112), hereinafter referred to as BMC (112), and a storage device (120) having a storage controller (121) and a micro controller unit (123), hereinafter referred to as MCU (123), the method comprising:
providing, by the BMC (112) of the host device (110), a first request comprising a first opcode field indicating a request for environment data to the MCU (123) of the storage device (120) through an out-of-band communication; and
providing, by the MCU (123), a first response including the environment data corresponding to the first request to the BMC (112) through the out-of-band communication,
supplying, by a main power supplier of the host device (110), a first power supply voltage to the storage controller (121);
supplying, by an auxiliary power supplier of the host device (110), a second power supply voltage different from the first power supply voltage to the MCU (123),
wherein the processor (111) of the host device (110) and the storage controller (121) of the storage device (120) communicate with each other through an in-band communication different from the out-of-band communication, and
wherein the BMC (112) and the MCU (123) directly communicate with each other through the out-of-band communication,
wherein the environment data include physical environment information of the storage device (120).

2. The method of claim 1, further comprising:
storing user data in a non-volatile memory device (122) of the storage device (120);
generating sensor data, by a sensor device (124) of the storage device (120), based on a sensing operation of the non-volatile memory device (122);
generating telemetry data based on a status monitoring operation of the non-volatile memory device (122);
receiving, by the MCU (123), the sensor data from the sensor device (124);
receiving, by the MCU (123), the telemetry data from the storage controller (121); and
storing, by the MCU (123), at least one of previous sensor data and previous telemetry data as log data,
wherein the environment data comprises one of the sensor data, the log data, and the telemetry data.

3. The method of claim 2, wherein the sensor data comprises at least one of voltage sensor data, current sensor data, temperature sensor data, and humidity sensor data.

4. The method of claim 2 or claim 3, wherein the telemetry data comprise at least one of program/erase cycle information, program count information, erase count information, read count information, error bit count information, and threshold voltage distribution information.

5. The method of any preceding claim, wherein first bits of the first opcode field of the first request indicate a sensor data command, and
wherein a response body field of the first response comprises current sensor data.

6. The method of any of claims 1-4, wherein first bits of the first opcode field of the first request indicate a log data command,
wherein a response body field of the first response comprises log data, and
wherein the log data comprises at least one of previous sensor data and previous telemetry data.

7. The method of any of claims 1-4, wherein first bits of the first opcode field of the first request indicate a telemetry data command, and
wherein a response body field of the first response comprises current telemetry data.

8. The method of any of claim 1-4, wherein first bits of the first opcode field of the first request indicate an encryption enable command,
wherein an encryption switch field of the first request comprises an encryption enable or an encryption disable, and
wherein a status code of the first response comprises a success of the first request.

9. The method of any of claims 1-4, wherein first bits of the first opcode field of the first request indicate an algorithm negotiation command,
wherein the first request comprises at least one security algorithm supported by the BMC (112), and
wherein a response body field of the first response comprises a target security algorithm selected by the MCU (123) from among the at least one security algorithm.

10. The method of claim 9, wherein the storage device further includes a non-volatile memory device (122) configured to store user data, and
wherein the method further comprises:
providing, by the BMC (112), a second request comprising a second opcode field having second bits indicating an encryption enable command to the MCU (123) through the out-of-band communication, based on the first response;
providing, by the MCU (123), a second response comprising a status code indicating a success of the second request to the BMC (112) through the out-of-band communication;
providing, by the BMC (112), a third request comprising a third opcode field having third bits indicating a sensor data command or a telemetry data command to the MCU (123) through the out-of-band communication;
generating, by the MCU (123), current environment data by performing a status monitoring operation or a sensing operation of the non-volatile memory device (122) based on the third request;
encrypting, by the MCU (123), the current environment data based on the target security algorithm;
providing, by the MCU (123), the encrypted current environment data to the BMC (112) through the out-of-band communication; and
managing, by the BMC (112), the storage device (120) based on the encrypted current environment data.

11. The method of claim 9, wherein the storage device (120) further includes a non-volatile memory device (122) configured to store user data,
wherein the MCU (123) includes a persistent memory configured to store previous environment data generated by performing a previous status monitoring operation or a previous sensing operation of the non-volatile memory device (122), and
wherein the method further comprises:
providing, by the BMC (112), a second request including a second opcode field having second bits indicating an encryption enable command to the MCU (123) through the out-of-band communication, based on the first response;
providing, by the MCU (123), a second response including a status code indicating a success of the second request to the BMC (112) through the out-of-band communication;
providing, by the BMC (112), a third request including a third opcode field having third bits indicating a log data command to the MCU (123) through the out-of-band communication;
loading, by the MCU (123), the previous environment data of the persistent memory based on the third request;
encrypting, by the MCU (123), the previous environment data based on the target security algorithm;
providing, by the MCU (123), the encrypted previous environment data to the BMC (112) through the out-of-band communication; and
managing, by the BMC (112), the storage device (120) based on the encrypted previous environment data.

12. The method of any preceding claim, wherein a status code of the first response comprises an error type indicating a failure of the first request, and
wherein the error type comprises at least one of:
a first error type indicating that a value corresponding to first bits of the first opcode field of the first request is invalid;
a second error type indicating that an integrity check field of the first request is invalid;
a third error type indicating that a request or response field of the first request is invalid;
a fourth error type indicating that a Non-Volatile Memory Express Management Interface message type of the first request is invalid;
a fifth error type indicating that a size of a message body of the first request exceeds a reference size;
a sixth error type indicating that the first request is invalid as a result of a message integrity check for the first request;
a seventh error type indicating that all of at least one security algorithms supported by the BMC (112) are not supported by the MCU (123); and
an eighth error type indicating a failure of encryption by the MCU (123).

13. The method of any preceding claim, wherein the physical environment information is sensor data, the method comprising:
storing, under control of the storage controller (121), user data (UD) in a non-volatile memory device (122) of the storage device;
receiving, by the MCU (123), the sensor data (SD) from a sensor device (124); and
storing the sensor data (SD) in persistent memory of the MCU (123) as log data.

14. The method of any preceding claim, wherein the electronic device (100) further includes an additional storage device, and
wherein the additional storage device further includes an additional storage controller and an additional MCU (123),
wherein the method further comprises:
performing a first communication operation directly between the processor (111) and the additional storage controller (121) through the in-band communication; and
performing a second communication operation directly between the BMC (112) and the additional MCU (123) through the out-of-band communication.

15. The method of any preceding claim, wherein the first opcode field indicates a sensor data command, a log data command, a telemetry data command, an algorithm negotiation command, or an encryption enable command.

## Patentansprüche

1. Verfahren zum Betreiben einer elektronischen Vorrichtung (100), einschließend eine Hostvorrichtung (110), die einen Prozessor (111) und einen Baseboard Management Controller (112), im Folgenden BMC (112) genannt, aufweist, und eine Speicherungsvorrichtung (120), die einen Speichercontroller (121) und einen Mikrocontrollereinheit (123), im Folgenden MCU (123) genannt, aufweist, wobei das Verfahren Folgendes umfasst:
Bereitstellen einer ersten Anfrage durch den BMC (112) der Hostvorrichtung (110), die ein erstes Opcode-Feld umfasst, welches eine Anfrage nach Umgebungsdaten an die MCU (123) der Speicherungsvorrichtung (120) über eine bandexterne Kommunikation anzeigt; und
Bereitstellen einer ersten Antwort durch die MCU (123) einschließlich der Umgebungsdaten, die der ersten Anfrage an den BMC (112) über die bandexterne Kommunikation entsprechen,
Bereitstellen einer ersten Stromversorgungsspannung für den Speichercontroller (121) durch einen Hauptstromversorger de Hostvorrichtung (110);
Bereitstellen einer zweiten Stromversorgungsspannung, die sich von der ersten Stromversorgungsspannung unterscheidet, durch einen Hilfsstromversorger der Hostvorrichtung (110) an die MCU (123).
wobei der Prozessor (111) der Hostvorrichtung (110) und der Speichercontroller (121) der Speicherungsvorrichtung (120) über eine bandinterne Kommunikation miteinander kommunizieren, die sich von der bandexternen Kommunikation unterscheidet, und
wobei der BMC (112) und die MCU (123) über die bandexterne Kommunikation direkt miteinander kommunizieren,
wobei die Umgebungsdaten Informationen über die physikalische Umgebung der Speicherungsvorrichtung (120) beinhalten.

2. Verfahren nach Anspruch 1, ferner umfassend:
Speichern von Benutzerdaten in einer nichtflüchtigen Speichervorrichtung (122) der Speicherungsvorrichtung (120);
Erzeugen von Sensordaten durch eine Sensorvorrichtung (124) der Speicherungsvorrichtung (120) auf Basis einer Erfassungsoperation der nichtflüchtigen Speichervorrichtung (122);
Erzeugen von Telemetriedaten auf Basis einer Statusüberwachungsoperation der nichtflüchtigen Speichervorrichtung (122);
Empfangen der Sensordaten vom Sensorvorrichtung (124) durch die MCU (123);
Empfangen der Telemetriedaten von dem Speicherkontroller (121) durch die MCU (123); und
Speichern von mindestens einem aus den vorherigen Sensordaten und den vorherigen Telemetriedaten als Protokolldaten durch die MCU (123),
wobei die Umgebungsdaten eines von der Sensordaten, Protokolldaten oder Telemetriedaten umfassen.

3. Verfahren nach Anspruch 2, wobei die Sensordaten mindestens einen von Spannungssensordaten, Stromsensordaten, Temperatursensordaten und Feuchtigkeitssensordaten umfassen.

4. Verfahren nach Anspruch 2 oder 3, wobei die Telemetriedaten mindestens eines von Programm/Lösch-Zyklus-Informationen, Programmzählerinformationen, Löschzählerinformationen, Lesezählerinformationen, Fehlerbitzählerinformationen und Schwellenspannungsverteilungsinformationen umfassen.

5. Verfahren nach einem vorstehenden Anspruch, wobei die ersten Bits des ersten Opcode-Felds der ersten Anfrage einen Sensordatenbefehl angeben, und
wobei ein Antwortkörperfeld der ersten Antwort aktuelle Sensordaten umfasst.

6. Verfahren nach einem der Ansprüche 1-4, wobei ersten Bits des ersten Opcode-Felds der ersten Anfrage einen Protokolldatenbefehl angeben,
wobei ein Antwortkörperfeld der ersten Antwort Protokolldaten umfasst, und
wobei die Protokolldaten mindestens eines von vorherigen Sensordaten und vorherigen Telemetriedaten umfassen.

7. Verfahren nach einem der Ansprüche 1-4, wobei ersten Bits des ersten Opcode-Felds der ersten Anfrage einen Telemetriedatenbefehl angeben, und
wobei ein Antwortkörperfeld der ersten Antwort aktuelle Telemetriedaten umfasst.

8. Verfahren nach einem der Ansprüche 1-4, wobei ersten Bits des ersten Opcode-Felds der ersten Anfrage einen Verschlüsselungsaktivierungsbefehl anzeigen,
wobei ein Verschlüsselungsschaltfeld der ersten Anfrage eine Verschlüsselungsaktivierung oder eine Verschlüsselungsdeaktivierung umfasst, und
wobei ein Statuscode der ersten Antwort einen Erfolg der ersten Anfrage umfasst.

9. Verfahren nach einem der Ansprüche 1-4, wobei ersten Bits des ersten Opcode-Felds der ersten Anfrage einen Algorithmus-Verhandlungsbefehl angeben,
wobei die erste Anfrage mindestens einen vom BMC unterstützten Sicherheitsalgorithmus (112) umfasst, und
wobei ein Antwortkörperfeld der ersten Antwort einen Zielsicherheitsalgorithmus umfasst, der von der MCU (123) aus dem mindestens einen Sicherheitsalgorithmus ausgewählt wird.

10. Verfahren nach Anspruch 9, wobei die Speicherungsvorrichtung ferner eine nichtflüchtige Speichervorrichtung (122) umfasst, die zum Speichern von Benutzerdaten konfiguriert ist, und
wobei das Verfahren ferner umfasst:
Bereitstellen einer zweiten Anfrage durch den BMC (112), die ein zweites zweiten Bits aufweisenden Opcode-Feld umfasst, die einen Verschlüsselungsaktivierungsbefehl an die MCU (123) über die bandexterne Kommunikation auf Basis der ersten Antwort anzeigen;
Bereitstellen einer zweiten Antwort durch die MCU (123), die einen Statuscode umfasst, der ein Erfolg der zweiten Anfrage an den BMC (112) über die bandexterne Kommunikation anzeigt;
Bereitstellen einer dritten Anfrage durch den BMC (112), die ein drittes dritten Bits aufweisenden Opcode-Feld, die einen Sensordatenbefehl oder einen Telemetriedatenbefehl an die MCU (123) über die bandexterne Kommunikation anzeigen;
Erzeugen, durch die MCU (123), von aktuellen Umgebungsdaten durch Durchführen einer Statusüberwachungsoperation oder einer Erfassungsoperation der nichtflüchtigen Speichervorrichtung (122) auf Basis der dritten Anfrage;
Verschlüsseln der aktuellen Umgebungsdaten durch die MCU (123) auf Basis des Zielsicherheitsalgorithmus;
Bereitstellen der verschlüsselten aktuellen Umgebungsdaten durch die MCU (123) an den BMC (112) über die bandexterne Kommunikation; und
Verwalten, durch den BMC (112), der Speichervorrichtung (120) auf Basis der verschlüsselten aktuellen Umgebungsdaten.

11. Verfahren nach Anspruch 9, wobei die Speicherungsvorrichtung (120) ferner eine nichtflüchtige Speichervorrichtung (122) umfasst, die zum Speichern von Benutzerdaten konfiguriert ist,
wobei die MCU (123) einen persistenten Speicher umfasst, der so konfiguriert ist, dass er frühere Umgebungsdaten speichert, die durch Ausführen einer vorherigen Statusüberwachungsoperation oder einer vorherigen Erfassungsoperation der nichtflüchtigen Speichervorrichtung (122) erzeugt wurden, und
wobei das Verfahren ferner umfasst:
Bereitstellen einer zweiten Anfrage durch den BMC (112), die ein zweites zweiten Bits aufweisenden Opcode-Feld einschließt, die einen Verschlüsselungsaktivierungsbefehl an die MCU (123) über die bandexterne Kommunikation auf Basis der ersten Antwort anzeigen;
Bereitstellen einer zweiten Antwort durch die MCU (123), die eines Statuscodes einschließt, der einen Erfolg der zweiten Anfrage an die BMC (112) über die bandexterne Kommunikation anzeigt;
Bereitstellen einer dritten Anfrage durch den BMC (112), die ein drittes dritten Bits aufweisenden Opcode-Feld einschließt, die einen Protokolldatenbefehl an die MCU (123) über die bandexterne Kommunikation anzeigen;
Laden der vorherigen Umgebungsdaten des persistenten Speichers durch die MCU (123) auf Basis der dritten Anfrage;
Verschlüsseln der vorherigen Umgebungsdaten durch die MCU (123) auf Basis des Zielsicherheitsalgorithmus;
Bereitstellen der verschlüsselten vorherigen Umgebungsdaten durch die MCU (123) an den BMC (112) über die bandexterne Kommunikation; und
Verwalten, durch den BMC (112), der Speicherungsvorrichtung (120) auf Basis der verschlüsselten vorherigen Umgebungsdaten.

12. Verfahren nach einem vorstehenden Anspruch, wobei ein Statuscode der ersten Antwort einen Fehlertyp umfasst, der ein Fehlschlagen der ersten Anfrage anzeigt, und
wobei der Fehlertyp mindestens einen der folgenden umfasst:
einen ersten Fehlertyp, der anzeigt, dass ein Wert, der den ersten Bits des ersten Opcode-Felds der ersten Anfrage entspricht, ungültig ist;
einen zweiten Fehlertyp, der anzeigt, dass ein Integritätsprüfungsfeld der ersten Anfrage ungültig ist;
einen dritten Fehlertyp, der anzeigt, dass ein Anfrage- oder Antwortfeld der ersten Anfrage ungültig ist;
einen vierten Fehlertyp, der anzeigt, dass ein nichtflüchtiges Speicher-Express-Management-Schnittstelle-Nachrichtentyp der ersten Anfrage ungültig ist;
einen fünften Fehlertyp, der anzeigt, dass eine Größe des Nachrichtenkörpers der ersten Anfrage eine Referenzgröße überschreitet;
einen sechsten Fehlertyp, der anzeigt, dass die erste Anfrage aufgrund einer Nachrichts-Integritätsprüfung der ersten Anfrage ungültig ist;
einen siebten Fehlertyp, der anzeigt, dass alle von mindestens einem vom BMC (112) unterstützten Sicherheitsalgorithmus von der MCU (123) nicht unterstützt wird; und
einen achten Fehlertyp, der auf einen Fehler bei der Verschlüsselung durch die MCU (123) hinweist.

13. Verfahren nach einem vorstehenden Anspruch, wobei es sich bei den physikalischen Umgebungsinformationen um Sensordaten handelt, das Verfahren umfassend:
Speichern von Benutzerdaten (UD) in einer nichtflüchtigen Speichervorrichtung (122) der Speicherungsvorrichtung unter der Steuerung des Speichercontrollers (121);
Empfangen der Sensordaten (SD) von einem Sensorvorrichtung (124) durch die MCU (123); und
Speichern der Sensordaten (SD) als Protokolldaten im persistenten Speicher der MCU (123).

14. Verfahren nach einem vorstehenden Anspruch, wobei die elektronische Vorrichtung (100) ferner eine zusätzliche Speicherungsvorrichtung einschließt, und
wobei die zusätzliche vorstehenden ferner einen zusätzlichen Speichercontroller und eine zusätzliche MCU (123) einschließt,
wobei das Verfahren ferner umfasst:
Durchführen einer ersten Kommunikationsoperation direkt zwischen dem Prozessor (111) und dem zusätzlichen Speichercontroller (121) über die bandinterne Kommunikation; und
Durchführen einer zweiten Kommunikationsoperation direkt zwischen dem BMC (112) und der zusätzlichen MCU (123) über die bandexterne Kommunikation.

15. Verfahren nach einem vorstehenden Anspruch, wobei das erste Opcode-Feld einen Sensordatenbefehl, einen Protokolldatenbefehl, einen Telemetriedatenbefehl, einen Algorithmusverhandlungsbefehl oder einen Verschlüsselungsaktivierungsbefehl angibt.

## Revendications

1. Procédé de fonctionnement d'un dispositif électronique (100) incluant un dispositif hôte (110) présentant un processeur (111) et un dispositif de commande de gestion de carte mère (112), ci-après dénommé BMC (112), et un dispositif de stockage (120) présentant un dispositif de commande de stockage (121) et une unité de micro-dispositif de commande (123), ci-après dénommée MCU (123), le procédé comprenant :
la fourniture, par le BMC (112) du dispositif hôte (110), d'une première requête comprenant un premier champ de code opération indiquant une demande de données d'environnement à la MCU (123) du dispositif de stockage (120) via une communication hors bande ; et
la fourniture, par la MCU (123), d'une première réponse incluant les données d'environnement correspondant à la première requête au BMC (112) via la communication hors bande,
la fourniture, par un fournisseur d'alimentation principal du dispositif hôte (110), d'une première tension d'alimentation au dispositif de commande de stockage (121) ;
la fourniture, par un fournisseur d'alimentation auxiliaire du dispositif hôte (110), d'une seconde tension d'alimentation différente de la première tension d'alimentation à la MCU (123),
dans lequel le processeur (111) du dispositif hôte (110) et le dispositif de commande de stockage (121) du dispositif de stockage (120) communiquent l'un avec l'autre par le biais d'une communication en bande différente de la communication hors bande, et
dans lequel le BMC (112) et la MCU (123) communiquent directement l'un à l'autre par le biais de la communication hors bande,
dans lequel les données d'environnement incluent des informations sur l'environnement physique du dispositif de stockage (120).

2. Procédé selon la revendication 1, comprenant en outre :
le stockage des données utilisateur dans un dispositif de mémoire non volatile (122) du dispositif de stockage (120) ;
la génération de données de capteur, par un dispositif de capteur (124) du dispositif de stockage (120), sur la base d'une opération de détection du dispositif de mémoire non volatile (122) ;
la génération de données de télémétrie sur la base d'une opération de surveillance d'état du dispositif de mémoire non volatile (122) ;
la réception, par la MCU (123), des données de capteur provenant du dispositif de capteur (124) ;
la réception, par la MCU (123), des données de télémétrie provenant du dispositif de commande de stockage (121) ; et
le stockage, par la MCU (123), d'au moins des données parmi les données de capteur précédentes et les données de télémétrie précédentes en tant que données de journalisation,
dans lequel les données d'environnement comprennent des données parmi les données de capteurs, les données de journalisation et les données de télémétrie.

3. Procédé selon la revendication 2, dans lequel les données de capteur comprennent au moins des données parmi les données de capteur de tension, les données de capteur de courant, les données de capteur de température et les données de capteur d'humidité.

4. Procédé selon la revendication 2 ou la revendication 3, dans lequel les données de télémétrie comprennent au moins des informations parmi les informations sur le cycle de programme/d'effacement, les informations sur le nombre de programmes, les informations sur le nombre d'effacements, les informations sur le nombre de lectures, les informations sur le nombre de bits d'erreur et les informations sur la distribution de la tension seuil.

5. Procédé selon une quelconque revendication précédente, dans lequel les premiers bits du premier champ de code opération de la première requête indiquent une commande de données de capteur, et
dans lequel un champ de corps de réponse de la première réponse comprend des données de capteur de courant.

6. Procédé selon l'une quelconque des revendications 1-4, dans lequel les premiers bits du premier champ de code opération de la première requête indiquent une commande de données de journalisation,
dans lequel un champ du corps de la réponse de la première réponse comprend des données de journalisation, et
dans lequel les données de journalisation comprennent au moins des données parmi les données de capteur précédentes et les données de télémétrie précédentes.

7. Procédé selon l'une quelconque des revendications 1-4, dans lequel les premiers bits du premier champ de code opération de la première requête indiquent une commande de données de télémétrie, et
dans lequel un champ du corps de la réponse de la première réponse comprend des données de télémétrie de courant.

8. Procédé selon l'une quelconque des revendications 1-4, dans lequel les premiers bits du premier champ de code opération de la première requête indiquent une commande d'activation de chiffrement,
dans lequel un champ de commutation de chiffrement de la première requête comprend une activation ou une désactivation du chiffrement, et
dans lequel un code d'état de la première réponse comprend un succès de la première requête.

9. Procédé selon l'une quelconque des revendications 1-4, dans lequel les premiers bits du premier champ de code opération de la première requête indiquent une commande de négociation d'algorithme,
dans lequel la première requête comprend au moins un algorithme de sécurité pris en charge par le BMC (112), et
dans lequel un champ de corps de la réponse de la première réponse comprend un algorithme de sécurité cible sélectionné par la MCU (123) parmi le au moins un algorithme de sécurité.

10. Procédé selon la revendication 9, dans lequel le dispositif de stockage inclut en outre un dispositif de mémoire non volatile (122) configuré pour stocker des données utilisateur, et
dans lequel le procédé comprend en outre :
la fourniture, par le BMC (112), d'une deuxième requête comprenant un deuxième champ de code opération présentant des deuxièmes bits indiquant une commande d'activation de chiffrement à la MCU (123) via la communication hors bande, sur la base de la première réponse ;
la fourniture, par la MCU (123), d'une deuxième réponse comprenant un code d'état indiquant un succès de la deuxième requête au BMC (112) via la communication hors bande ;
la fourniture, par le BMC (112), d'une troisième requête comprenant un troisième champ de code opération présentant trois bits indiquant une commande de données de capteur ou une commande de données de télémétrie à la MCU (123) via la communication hors bande ;
la génération, par la MCU (123), des données d'environnement de courant en effectuant une opération de surveillance d'état ou une opération de détection du dispositif de mémoire non volatile (122) sur la base de la troisième requête ;
le chiffrement, par la MCU (123), des données d'environnement de courant en fonction de l'algorithme de sécurité cible ;
la fourniture, par la MCU (123), des données d'environnement de courant chiffrées au BMC (112) via la communication hors bande ; et
la gestion, par le BMC (112), du dispositif de stockage (120) sur la base des données d'environnement de courant chiffrées.

11. Procédé selon la revendication 9, dans lequel le dispositif de stockage (120) inclut en outre un dispositif de mémoire non volatile (122) configuré pour stocker des données utilisateur,
dans lequel la MCU (123) inclut une mémoire persistante configurée pour stocker les données d'environnement précédentes générées par l'exécution d'une opération de surveillance d'état précédente ou d'une opération de détection précédente du dispositif de mémoire non volatile (122), et
dans lequel le procédé comprend en outre :
la fourniture, par le BMC (112), d'une deuxième requête incluant un deuxième champ de code opération présentant des deuxièmes bits indiquant une commande d'activation de chiffrement à la MCU (123) via la communication hors bande, sur la base de la première réponse ;
la fourniture, par la MCU (123), d'une deuxième réponse incluant un code d'état indiquant un succès de la deuxième requête au BMC (112) via la communication hors bande ;
la fourniture, par le BMC (112), d'une troisième requête incluant un troisième champ de code opération présentant trois bits indiquant une commande de données de journalisation à la MCU (123) via la communication hors bande ;
le chargement, par la MCU (123), des données d'environnement précédentes de la mémoire persistante sur la base de la troisième requête ;
le chiffrement, par la MCU (123), des données d'environnement précédentes sur la base de l'algorithme de sécurité cible ;
la fourniture, par la MCU (123), des données d'environnement précédentes chiffrées au BMC (112) via la communication hors bande ; et
la gestion, par le BMC (112), du dispositif de stockage (120) sur la base des données d'environnement précédentes chiffrées.

12. Procédé selon une quelconque revendication précédente, dans lequel un code d'état de la première réponse comprend un type d'erreur indiquant un échec de la première requête, et
dans lequel le type d'erreur comprend au moins l'un des éléments suivants :
un premier type d'erreur indiquant qu'une valeur correspondant aux premiers bits du premier champ de code opération de la première requête est invalide ;
un deuxième type d'erreur indiquant qu'un champ de contrôle d'intégrité de la première requête est invalide ;
un troisième type d'erreur indiquant qu'un champ de requête ou de réponse de la première requête est invalide ;
un quatrième type d'erreur indiquant qu'un type de message de l'interface de gestion de la mémoire non volatile express de la première requête est invalide ;
un cinquième type d'erreur indiquant qu'une taille du corps du message de la première requête dépasse une taille de référence ;
un sixième type d'erreur indiquant que la première requête est invalide à la suite d'un contrôle d'intégrité du message pour la première requête ;
un septième type d'erreur indiquant que tous d'au moins un algorithme de sécurité pris en charge par le BMC (112) n'est pas pris en charge par la MCU (123) ; et
un huitième type d'erreur indiquant un échec de chiffrement par la MCU (123).

13. Procédé selon une quelconque revendication précédente, dans lequel les informations sur l'environnement physique sont des données de capteur, le procédé comprenant :
le stockage, sous le contrôle du dispositif de commande de stockage (121), des données utilisateur (UD) dans un dispositif de mémoire non volatile (122) du dispositif de stockage ;
la réception, par la MCU (123), des données de capteur (SD) provenant d'un dispositif de capteur (124) ; et
le stockage des données de capteur (SD) dans la mémoire persistante de la MCU (123) en tant que données de journalisation.

14. Procédé selon une quelconque revendication précédente, dans lequel le dispositif électronique (100) inclut en outre un dispositif de stockage supplémentaire, et
dans lequel le dispositif de stockage supplémentaire inclut en outre un dispositif de commande de stockage supplémentaire et une MCU supplémentaire (123),
dans lequel le procédé comprend en outre :
la réalisation d'une première opération de communication directement entre le processeur (111) et le dispositif de commande de stockage supplémentaire (121) via la communication en bande ; et
la réalisation d'une seconde opération de communication directement entre le BMC (112) et la MCU supplémentaire (123) via la communication hors bande.

15. Procédé selon une quelconque revendication précédente, dans lequel le premier champ de code opération indique une commande de données de capteur, une commande de données de journalisation, une commande de données de télémétrie, une commande de négociation d'algorithme ou une commande d'activation de chiffrement.
